# EUROPEAN PATENT APPLICATION

(11) **EP 2 050 563 A2**
(43) Date of publication of application: **22.04.2009**
(21) Application number: 08160577.6
(22) Date of filing: 17.07.2008
(51) Int. Cl.: B32B 15/01, B23K 35/00

(54) **Solderable aluminium-based material**

(30) Priority: 19.10.2007 TW 96217510 U
(71) Applicant: MicroSolar Corp., Miaoli County 351 (TW)
(72) Inventor: Wang, Chung-Lin, 300, Hsinchu City (TW)
(74) Representative: Dossmann, Gérard

(57) **Abstract**

The present invention discloses a solderable aluminum-based material, wherein electron donors combine with the non-bonded atoms on the surface of an aluminum-based material. The bonding between the electron donors and the aluminum atoms on the surface generates a protective film to prevent from the formation of an aluminum oxide layer on the surface of the aluminum-based material. The present invention improves the conventional aluminum-based material, and has lightweightness, a low price, a high economic value, a high electric conductivity, a high thermal conductivity and a superior solderability. Thereby, a normal soldering, a total-face soldering or a double-side soldering can be easily performed on the solderable aluminum-based material of the present invention with a common soldering technology.

## Description

The present invention relates to a solderable material, particularly to a solderable aluminum-based material which tin or other metals can be directly soldered on.

It has been over one hundred years since Thomason invented the resistance welding technology. From then on, the technology and equipment thereof has been persistently improved and widely used in many fields, such as the ship building industry, petrochemical industry, high temperature/high pressure piping engineering, water supply systems, steel frame engineering of a high rising building, automobile manufacturing industry, metal working industry, etc.

The common base materials, which are to be soldered, include: copper, tin, silver, gold, aluminum or the alloys thereof. In spite of their superior electric conductivities, silver and gold base materials are very expensive and hard to be used extensively. In spite of their cheap prices, the application of copper base materials is limited by their heaviness and aptness to oxidize. Tin base materials are usually used in plating. Aluminum base materials, which are lightweight, cheap and with a good electric conductivity, have a very high potential availability. However, the surface of aluminum base materials exposed to air will form a very stable aluminum oxide layer, which considerably reduces the solderability thereof. To improve the solderability, the conventional technology removes the aluminum oxide layer, or removes the aluminum oxide layer chemically and electroplates a layer of nickel, zinc, or another metal, which is more solderable. Thereby, aluminum base materials can be soldered more easily.

However, the nickel or zinc plated on the surface of an aluminum base material will affect the electric conductivity and reduce the adhesion after soldering. Therefore, some special welding technologies are used to overcome the abovementioned problems. For example, the argon welding (TIG (Tungsten Inert Gas) welding), also called the non-consumable electrode welding, uses a tungsten rod as the electrode and replaces the welding flux with argon to protect the welded metal. In the argon welding, once arc occurs, the filler wire is fed into the weld seam manually. Such a welding technology can be used to join aluminum metal or aluminum alloys. There is also a gas shielded metal arc welding (GMAW), which uses a consumable electrode and a protective gas mixture of over 80% argon and below 20% other gases. In GMAW, the filler wire is automatically and continuously fed into the weld seam by a motor. Such a welding technology is specially used in joining thicker base materials of stainless steel, aluminum metal or aluminum alloys. The GMAW technology generates a high temperature in the welding process and has a higher cost. Thus, GMAW lacks economic efficiency.

Accordingly, the present invention proposes a solderable aluminum-based material to effectively solve the conventional problems.

The primary objective of the present invention is to provide a solderable aluminum-based material, wherein other metals can be easily soldered on the surface of the aluminum-based material under the action of electron donors.

Another objective of the present invention is to provide a solderable aluminum-based material, which has lightweightness, a low price, a high electric conductivity and a high thermal conductivity, and can be soldered, total-face soldered or double-side soldered easily with a common soldering technology.

To achieve the abovementioned objectives, the present invention proposes a solderable aluminum-based material, which comprises: an aluminum-based material and electron donors. The electron donors combine with the non-bonded atoms on the surface of the aluminum-based material to provide a protective film to prevent from the formation of an aluminum oxide layer on the surface of the aluminum-based material.

Below, the embodiments are described in detail in cooperation with the attached drawings to make easily understood the objectives, technical contents, characteristics and accomplishments of the present invention.
- Fig.1: is a diagram schematically showing the structure of an aluminum-based material according to the present invention; and
- Fig.2: is a diagram schematically showing that a tin layer is formed on the surface of an aluminum-based material according to the present invention.

As a very stable aluminum oxide layer forms on the surface of aluminum-based materials when the surface is exposed to air, aluminum-based materials have a low solderability. Thus, the present invention makes an electron donor combine with the surface of an aluminum-based material to prevent from the oxidization of the surface of the aluminum-based material and then inhibit the formation of an aluminum oxide layer on the surface of the aluminum-based material.

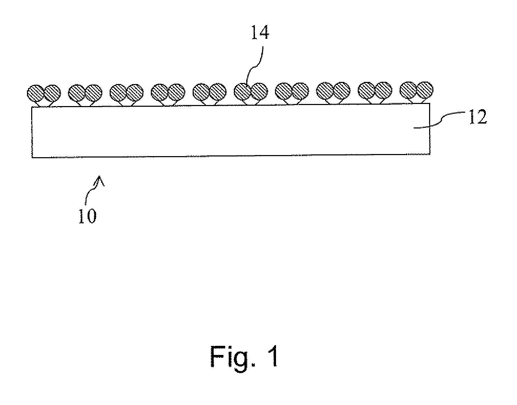

Refer to Fig.1 for the structure of an aluminum-based material according to the present invention. The solderable aluminum-based material 10 of the present invention comprises: an aluminum-based material 12, which may be aluminum metal, an aluminum alloy, aluminum-magnesium alloy, or a magnesium-aluminum alloy. The surface of the aluminum-based material 12 has non-bonded atoms, and each non-bonded atom combines with an electron donor 14 to form a protective film. In Fig.1, a double-atom unit is used to exemplify the electron donor. However, the electron donor may also be a single-atom unit or a triple-atom unit. After the protective film has been formed on the surface of the aluminum-based material 12, solder materials can be easily soldered thereon, including: pure tin, lead-tin alloys, lead-free tin alloys and other tin alloys. Naturally, a soldering flux should be applied before soldering.

The abovementioned electron donor may contain a V-group element, such as nitrogen, phosphorus, arsenic, antimony, or bismuth. The abovementioned electron donor may contain a VI-group element, such as sulfur, selenium, tellurium, or polonium. The abovementioned electron donor may contain a VII-group element, such as fluorine, chlorine, bromine, or iodine. The abovementioned electron donor may contain a double bond or a triple bond, such as an alkene, an alkyne, benzene, or an aromatic. The abovementioned electron donor may contain a carboxyl functional group, such as an aldehyde, or a ketone. The abovementioned electron donor may contain a hydroxyl functional group. Besides, the abovementioned electron donor may contain an organic complex, such as EDTA (ethylenediaminetetraacetic acid). Further, the electron donor may even be a mixture of the abovementioned various electron donors.

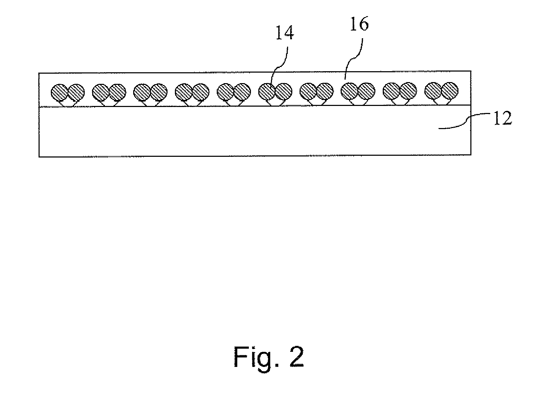

Refer to Fig.2. After the electron donors 14 combine with the surface of the aluminum-based material 12, a protective film forms, and a large-area tin layer 16 can be directly formed on the solderable aluminum-based material 10 without the problem of adhesion. Thus, a total-face soldering or a double-side soldering can be performed on the solderable aluminum-based material 10.

In the present invention, tin or other metals can be easily soldered on the surface of an aluminum-based material by a common soldering technology (i.e. by heating) under the action of the electron donors. Thus, the present invention has lightweightness, a low price, a high electric conductivity, a high thermal conductivity, and a superior solderability. Therefore, the present invention has a high economic value and can be widely used in the industry.

The embodiments described above are only to exemplify the technical thoughts and characteristics of the present invention to enable the persons skilled in the art to understand, make, and use the present invention. However, it is not intended to limit the scope of the present invention. Therefore, any equivalent modification or variation according to the spirit of the present invention is to be also included within the scope of the present invention.

## Claims

1. A solderable aluminum-based material comprising an aluminum-based material and electron donors, wherein said electron donors combine with non-bonded atoms on a surface of said aluminum-based material to form a protective film.

2. The solderable aluminum-based material according to claim 1, wherein at least one tin layer is formed on said aluminum-based material.

3. The solderable aluminum-based material according to claim 2, wherein said tin layer is made of pure tin, a lead-tin alloy, a lead-free tin alloy, or another tin alloy.

4. The solderable aluminum-based material according to claim 1, wherein said aluminum-based material is made of aluminum metal, an aluminum alloy, an aluminum-magnesium alloy, or a magnesium-aluminum alloy.

5. The solderable aluminum-based material according to claim 1, wherein said electron donors are electron donors with V-group elements.

6. The solderable aluminum-based material according to claim 1, wherein said electron donors are electron donors with VI-group elements.

7. The solderable aluminum-based material according to claim 1, wherein said electron donors are electron donors with VII-group elements.

8. The solderable aluminum-based material according to claim 1, wherein said electron donor contains a single atom, double atoms, three atoms, a double bond, or a triple bond.

9. The solderable aluminum-based material according to claim 8, wherein said electron donor is an alkene, an alkyne, benzene, or an aromatic.

10. The solderable aluminum-based material according to claim 1, wherein said electron donor are electron donors with a carboxyl functional group.
